Europäisches Patentamt

**European Patent Office**

**Office européen des brevets**

(19)

(11) Publication number: **0 015 705**
**A1**

(12) # EUROPEAN PATENT APPLICATION

(21) Application number: 80300567.7

(51) Int. Cl.³: **B 62 D 1/18**

(22) Date of filing: 26.02.80

(30) Priority: 28.02.79 GB 7907095

(71) Applicant: **LANSING BAGNALL LIMITED, Kingsclere Road, Basingstoke, Hampshire (GB)**

(43) Date of publication of application: **17.09.80**
**Bulletin 80/19**

(72) Inventor: **Goodacre, Ronald, "Denton" Sherfield Bramley, Basingstoke Hampshire (GB)**
Inventor: **Piper, Ronald William, 38 Kestrel Road, Basingstoke Hampshire (GB)**

(74) Representative: **Horton, Andrew Robert Grant, BOULT, WADE & TENNANT 27 Furnival Street, London, EC4A 1PQ (GB)**

(84) Designated Contracting States: **BE CH DE FR GB IT NL SE**

(54) Vehicle steering apparatus.

(57) The upper section (2) of a telescopic steering column (1) has an outer tube (2A) and an inner rotatable shaft (2B) and can slide over a splined lower section (3) (arrow A) and can pivot back and forth (arrow B) about a lateral axis (6). The upper section (2) extends through a slider (13) of a clamp (7) so that pivoting of the upper section (2) makes the slider (13) slide relative to a fixed plate (9) in a direction (arrow C) determined by guide means (16,17). Rotation of a control knob (8) extending through the fixed plate (9) causes a clamping block (15) to trap the slider (13) immovably against the fixed plate (9), preventing said pivoting of the upper section (2). At the same time a portion (30) on the block (15) straightens at least one bent spring (24) which then pushes a pad (20) against the outer tube (2A) of the upper section (2) to trap the outer tube (2A) against a part (23) of the slidable plate (13) to prevent said relative sliding movement of the steering column sections. Suitable adjusting means (25 to 28) are preferably provided to ensure the upper section (2) is clamped against said pivoting and sliding movements simultaneously.

"VEHICLE STEERING APPARATUS"

This invention relates to vehicle steering apparatus including a steering column which can be adjusted relative to its mounting in the vehicle and be clamped in a particular orientation relative to its mounting in order, for example, to suit different operators.

It is known to provide vehicle steering apparatus comprising a steering column which has a lower part , which is adapted to be mounted in a manner which permits pivotal movement of the steering column about an axis extending laterally of the longitudinal axis of said steering column, an upper part which has a sliding connection with the lower part and includes relatively rotatable members of which one can be clamped in position without affecting the steering action of the column, and means for clamping the said one member.   It is the purpose of the present invention to provide an easily operated clamp which can inhibit simultaneously pivotal movement of the steering column and the relative sliding movement of the said parts of the steering column sections and thereby, in effect, adjustably fix the height and rake of the steering wheel. For this purpose the clamping means includes a fixture extending substantially laterally of the steering column, a slider which is capable of movement along the fixture, is connected to the said one member and carries a pressure pad disposed to bear against the said one member, an operating device which operates a clamp to fix the slider relative to the fixture, a spring strip which is located on the slider and provides force for the pressure pad, the spring strip being stressed by engagement with part of the said clamp.

Reference is now made to the accompanying drawings which illustrate, by way of example, one embodiment of the invention, and of which:-

Figure 1 is a diagrammatic side view including a part vertical section of a vehicle steering apparatus according to the invention showing the clamping device in position to clamp the steering column about pivotal and up and down sliding movement;

Figure 2 is a view, of the clamp plate and other movable parts of the apparatus of Figure 1, viewed from above on an enlarged scale; and

Figure 3 is a sectional view on line III-III of Figure 1.

A steering column 1 comprises an upper part 2 which carries at its upper end a steering wheel or like device (not visible), and a lower part 3 which is inserted into the lower end of the upper part 2. The upper part 2 is constituted by an outer tubular member 2A which surrounds an inner shaft 2B; the steering wheel is mounted on the upper end of the shaft 2B. The inner shaft 2B is mounted in the outer member 2A in any suitable manner so that it can rotate freely with respect to the outer member 2A, but cannot move longitudinally with respect thereto. The lower end of the inner shaft 2B and the upper end of the lower part 3 are correspondingly splined so that, although the upper part 2 (i.e. both outer member 2A and inner shaft 2B) can slide axially in the direction of the double headed arrow A relative to the lower part 3, any rotation (normally caused by the turning of the steering wheel) of the inner shaft 2B about its axis produces corresponding rotation of the lower part 3.

At the lower end of the lower part 3 is a universal joint 4 which connects the lower part 3 to a short shaft 5, which may be connected by a second universal joint or other suitable coupling to the vehicle's steering box (not shown). Thus the two parts 2,3 of the steering column 1 can pivot in the direction of double-headed arrow B about an axis 6 which extends perpendicularly to the axis of the steering column. When the steering column is mounted in the vehicle, the axis 6 is preferably aligned laterally of the vehicle so that the steering column 1 can pivot backwards and forwards of the vehicle.

A steering column which is capable of pivoting and longitudinal sliding movement in addition to its rotary movement is useful in, for example, adjusting the position of the steering wheel to suit various operators. Whatever may be the function of the movement of the steering column, it is necessary for there to be means for clamping the column in at least one selected orientation, and to restrain it from both the pivotal motion (arrow B) and the relative longitudinal sliding motion (arrow A).

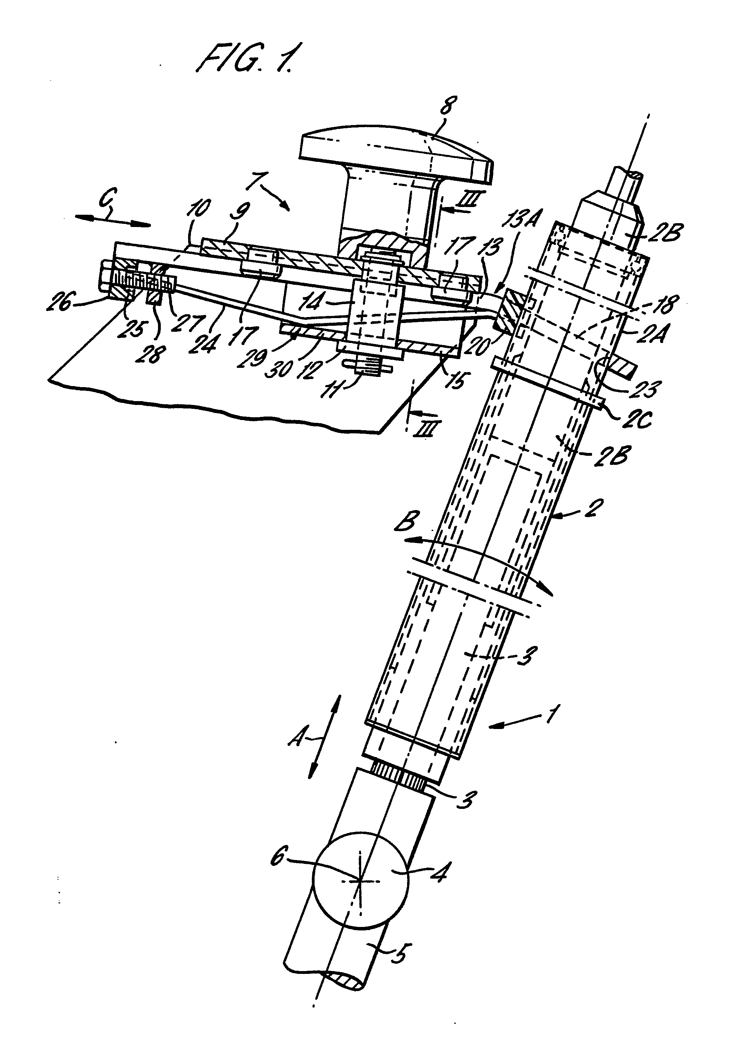

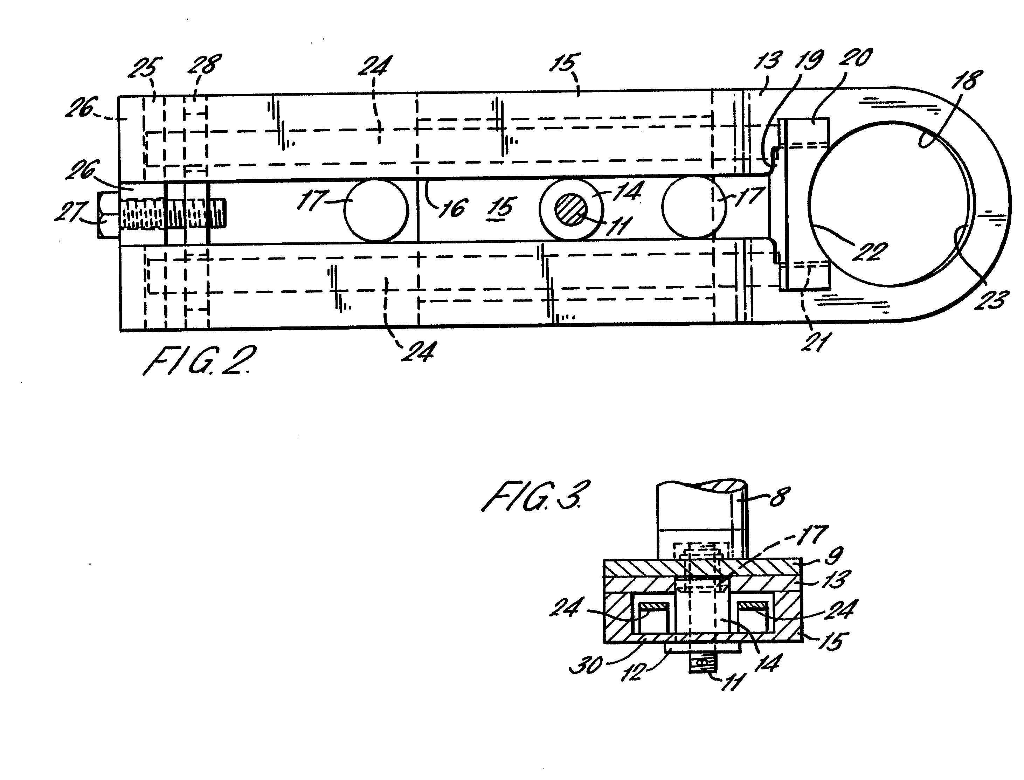

In this embodiment, a clamping device 7 is constructed to perform both of these clamping functions, preferably simultaneously by the operation of a single operating member and in particular by the rotation of a single control knob 8 in a clockwise direction. The clamping device 7 comprises a fixture, constituted by a plate 9 which is fixed, conveniently by welding to a scuttle or frame 10 on the vehicle. The control knob 8 is provided with a threaded stud 11 which engages a nut 14 mounted at the free end of the stud 11; the nut passes through the plate 9 and a slider 13 and has a flange 12 for engagement with the underside of a channel-shaped clamping block 15 (Figure 3) for a purpose to be described below.

The slider 13 has, as shown in Figure 2, a centrally elongate slot 16 through which the nut 14 extends. Pins 17 which are mounted, e.g. by welding, on the underside of the plate 9 are accommodated in the slot 16 for sliding movement therealong and so constrain any movement of the slider 13 relative to the plate 9 to movement in the direction of arrow C parallel to the axis of the slot 16 and parallel to the plate 9. At one end of the slot 16 in the slider 13, there is provided a circular aperture 18 through which the outer member 2A of the steering column's upper part 2 extends. The slider 13 is bent at a location 13A to reduce the slope of that part of the plate which carries the knob 8. The outer member 2A is a sufficiently loose fit in the aperture 18 to permit it to move in a longitudinal direction along its axis relative to the slider 13 through hole 18 in the direction of arrow A, and the slot 16 is aligned perpendicularly to the axis 6 so that pivotal movement of the steering column 1 in the direction of arrow B produces corresponding movement of the slider 13 in the direction of arrow C relative to the plate 9.

Rotation of the knob 8 in the nut 14 in the appropriate direction causes the nut 14 to pull the clamping block 15 upwards until the slider 13 is trapped between the clamping block 15 and the plate 9, thus preventing movement of the slider 13 in the direction of arrow C and thus pivoting of the steering column 1 in the arc denoted by the arrow B.

It will be observed that the slider 13 is in essence, in the form of a U of which the base extends around the part 2 and of which the top is closed. It is therefore readily possible to provide, instead of the slider 13, a U-shaped thick wire strap of which the legs are supported by apertures in downwardly extending flanges at each end of the plate 9 and to join the ends of the legs by a bar which is held in place by nuts on the legs' ends which may be screw threaded and would pass through the bar near each end thereof.  Moreover, the knob 8 and the nut 14 could be supplanted by a pivoted toggle lever which could operate a connecting rod to draw the block 15 upwardly, and thereby provide the same clamping action as occurs when the nut 14 is drawn upwardly by clockwise rotation of the knob 8.

At the side of the aperture 18 in the slider 13 and adjacent the slot 16 there is mounted, in a slot 19 in the slider 13, a plastics pressure pad 20, which may be made of a resilient plastic such as "nylon".  The shorter sides of the pad 20 are slotted at 21 (Figure 2) so that the pad 20 can also move in slot 19 in the direction of arrow C relative to the slider 13.  The pad 20 has a concave surface adjacent the aperture 18 so that it can engage the curved side of the outer member 2A and, if sufficient force is applied to the pad 20, trap the outer member 2A against the opposite side 23 of the aperture 18. This has the effect of restraining the upper part 2 from sliding over the lower part 3 in the direction of arrow A.

Force is applied to pad 20 by two elongate strip springs 24, disposed under the slider 13; the two elongate strip springs 24 are arranged parallel to the longitudinal direction of the slot 16.  Each spring 24 has one end which bears against the pad 20, in the angle formed  by the bend 13A in the slider 13 and the side of the pad 20. The other end of each spring 24 is accommodated in a laterally extending channel 25 in a bracket 26, itself mounted by means of a screw 27 on a flange 28 welded to the underside of the slider 13. The springs 24 pass freely through appropriate holes in flange 28. Both springs 24 are bent at 29 between their ends, the degree of bending determining the force applied by the springs 24 on pad 20. The springs 24 pass through the channel provided by the channel shaped clamping block 15 so that in the region of the bends 29, the base 30 of the channel engages under the springs 24. Thus when the block 15 is pulled towards plate 9 by (for example) rotation of control knob 8, the channel base 30 tends to straighten each spring, thereby stressing it and increasing the force applied to the pad 20 until it clamps the outer member 2A against the edge 23 of the aperture 18 as aforesaid.

The springs may, if desired, be joined together at both ends so that in effect they constitute a single spring with an elongate central slot.

Owing to the mounting of bracket 26 on the slider 13 _via_ the threaded screw 27, the position of the ends of the springs 24 in channel 25 relative to the slider 13 can be readily adjusted, thereby permitting, while the part 2 can still slide over the part 3, preliminary adjustment of the force which will be applied to the pad 20 when the upper part 2 is clamped by the pad 20. By an appropriate adjustment of the screw 27, the steering column's upper part 2 can be clamped at the same time against both sliding movement and pivotal movement.

To adjust the position of the steering column, the knob 8 or its equivalent is operated to decrease the clamping effect of the block 15 and pad 20, the steering column's upper part 2 is raised or lowered and pivoted backwards or forwards as desired until the steering wheel is in a position which suits the requirements of an operator. The knob 8 or its equivalent is then operated to restore the block 15 and pad 20 to their clamping positions.

To prevent the steering column's upper part 2 from sliding so far that it might be accidentally removed from the lower part 3 when the clamping device 7 is disengaged, a collar 2C is fixed to the upper section 2 at a location spaced by an appropriate distance below the aperture 18 in the slider 13.

The fact that the clamping device 7 is arranged so that the axis of rotation of the knob 8 and hence the direction of movement of the slider 13 towards plate 9 is substantially aligned with the axis of the steering column enables the knob 8 or other operating device to be easily accessible to the operator from above. Such accessibility facilitates the adjustment of the steering column.

CLAIMS:

1.    Vehicle steering apparatus including a steering column comprising a lower part, which is adapted to be mounted in a manner which permits pivotal movement of the steering column about an axis extending laterally of the longitudinal axis of said steering column, an upper part which has a sliding connection with the lower part and includes relatively rotatable members of which one can be clamped in position without affecting the steering action of the column, and means for clamping the said one member, characterised in that the means for clamping comprises a fixture (9) extending substantially laterally of the steering column (1), a slider (13) which is capable of movement along the fixture (9), is connected to the said one member (2A) and carries a pressure pad (20) disposed to bear against the said one member, an operating device (8) which operates a clamp (14,15) to fix the slider (13) relative to the fixture, a spring strip (24) which is located on the slider and provides force for the pressure pad, the spring strip being stressed by engagement with part (15) of the said clamp.

2.    Vehicle steering apparatus according to claim 1 in which guide means (16,17) are provided for constraining movement of said slider (13) relative to said fixture (9) to movement back and forth in said one direction.

3.    Vehicle steering apparatus according to claim 1 or claim 2 in which said clamp includes a block (15) which is movable towards said fixture (9) so as to trap the slider (13) between the block and the fixture.

4.    Vehicle steering apparatus according to any of claims 1 to 3, in which the slider has an aperture (18) in which the steering column's upper part (2) is accommodated for longitudinal sliding movement relative to said slider.

5.    Vehicle steering apparatus according to claim 4 in which the pressure pad (20) is loosely mounted in said slider and is arranged to trap the said one member (2A) of the steering column in said aperture.

6.    Vehicle steering apparatus according to any of claims 1 to 5, in which the strip (24) has a bend located intermediate its ends, and in which the bend is engaged by the clamp's part (15) such that the strip is straightened and increases the force exerted by the pad (20).

7.    Vehicle steering apparatus as claimed in claim 6 in which means are provided for adjusting the position of said strip relative to said slider.

ARGH/EA146

## FIG. 1.

0015705

FIG.2.

FIG.3.

| Category | Citation of document with indication, where appropriate, of relevant passages | Relevant to claim |
|---|---|---|
| | GB - A - 484 978 (S.F. BURROWS)<br>* page 2, lines 6 to 12; fig. 1 *<br>-- | 1,3 |
| | US - A - 1 367 695 (A.L. GRAY)<br>* claims; fig. *<br>-- | 1 |
| | US - A - 2 185 779 (L. TVEIDT)<br>* fig. 1 to 4 *<br>-- | 1 |
| | US - A - 3 724 290 (BURTON)<br>* fig. 1 to 5 *<br>-- | 1 |
| A | DE - B2 - 1 949 241 (KLÖCKNER-HUMBOLDT-DEUTZ AG)<br>-- | |
| A | US - A - 4 046 024 (BROUCKSOU)<br>---- | |

**CLASSIFICATION OF THE APPLICATION (Int. Cl.²)**

B 62 D 1/18

**TECHNICAL FIELDS SEARCHED (Int.Cl.²)**

B 62 D 1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

**DOCUMENTS CONSIDERED TO BE RELEVANT**

The present search report has been drawn up for all claims

| Place of search | Date of completion of the search | Examiner |
|---|---|---|
| Berlin | 29-05-1980 | LEITZ |

EPO Form 1503.1  06.78